# EUROPÄISCHE PATENTANMELDUNG

(11) **EP 2 020 746 A1**
(43) Veröffentlichungstag der Anmeldung: **04.02.2009**
(21) Anmeldenummer: 07015155.0
(22) Anmeldetag: 02.08.2007
(51) Int. Cl.: H02P 25/04, H02P 25/18

(54) **Verfahren zum Ansteuern eines Asynchronmotors**

(71) Anmelder: Grundfos Management A/S, 8850 Bjerringbro (DK)
(72) Erfinder: Aarestrup, Jan Caroe, 8850 Bjerringbro (DK); Soerensen, Jens Engen, Rancho Palos Verdes, CA 90275 (US); Jensen, Klaus, Sloth, 9550 Mariager (DK)
(74) Vertreter: Vollmann, Heiko

(57) **Zusammenfassung**

Das Verfahren zum Ansteuern eines mindestens zwei Wicklungen aufweisenden Asynchronmotors ist vorgesehen, um zum Zwecke einer Drehzahländerung eine erste Wicklung und mindestens eine zweite Wicklung mittels mindestens zwei elektronischen Schaltern zu verschalten. Zur Vermeidung von Stromspitzen werden beim Umschalten für eine oder mehrere Zeitspannen beide Schalter geöffnet.

## Beschreibung

Die Erfindung betrifft ein Verfahren zum Ansteuern eines Asynchronmotors mit den im Oberbegriff des Anspruchs1 angegebenen Merkmalen sowie einen solchen Asynchronmotor gemäß Anspruch 12.

Asynchronmotoren insbesondere kleiner Leistung werden vielfältig eingesetzt, da sie kostengünstig in der Herstellung, verschleißarm und meist unproblematisch im Betrieb sind. Typischerweise werden Asynchronmotoren für Anwendungen kleiner Leistung bis zum Beispiel 200 Watt eingesetzt, wie sie zum Antrieb von Kreiselpumpen, beispielsweise Heizungsumwälzpumpen und dergleichen eingesetzt werden. Es handelt sich dabei meist um einphasig netzversorgte ein- oder zweiphasige Asynchronmotoren. Die Drehzahl dieser Motoren ist dabei von der Netzfrequenz abhängig.

Zur Steuerung der Drehzahl ist es bekannt, der Hauptwicklung Teile der Hilfswicklung vorzuschalten. Für eine quasi stufenlose Drehzahländerung zählt es zum Stand der Technik, Frequenzumrichter vorzuschalten, die jedoch aufwändig und teuer sind. Eine Änderung der Drehzahl lässt sich jedoch auch durch entsprechende Ansteuerung elektronischer Schalter, typischerweise Triacs herbeiführen, mit denen eine Phasenanschnittsteuerung erfolgt. Das Problem solcher Phasenanschnittsteuerungen liegt darin, das der Verzögerungswinkel, also der Winkel, nach dem der Schalter nach Durchlaufen des Nullpunkts der Versorgungsspannung wieder eingeschaltet wird um den Motor mit Spannung zu versorgen, nur in engen Grenzen variiert werden kann. Kleine Verzögerungswinkel haben wenig Einfluss auf den Effektivwert (RMS-Wert) der Spannung wohingegen große Verzögerungswinkel den Leistungsfaktor des Motors in unzulässiger Weise beeinflussen. Dieses Problem verstärkt sich mit zunehmender Leistung des Motors. Darüber hinaus vermindert sich auch mit wachsendem Verzögerungswinkel die im Motor eingebrachte Leistung.

Alternativ hierzu zählt es zum Stand der Technik, die Drehzahlsteuerung mit Hilfe einer Pulskaskadensteuerung durchzuführen. Hierbei werden mittels der Triacs Halbwellen der Versorgungsspannung der Hauptwicklung weggeschnitten, in dem ein in Reihe mit der Hauptwicklung liegender Schalter entsprechend öffnend angesteuert wird. Verständlicherweise können nicht beliebig viele Teilwellen der Versorgungsspannung ausgefiltert werden, da dann der Motor nicht mehr ausreichend versorgt wird und nicht mehr mit konstanter Geschwindigkeit läuft. Dies kann insbesondere beim Nasslaufkreiselpumpenaggregaten zu unerwünschten Geräuschentwicklungen führen, die aufgrund der Flüssigkeitskopplung in das Leitungsnetz, also zum Beispiel in die Heizungsanlage gelangen, was unerwünscht ist. Auch dieser Effekt steigert sich mit zunehmender Motorleistung.

Insoweit günstiger ist ein Umschaltverfahren (toggling) bei dem die Hauptwicklung je nach anzusteuernder Drehzahl mit einem Teil der Hilfswicklung in Reihe geschaltet wird. Je nach Anzahl der Hilfswicklungsteile und der diesen zugeordneten Schaltern kann hierdurch eine nahezu stufenlose Drehzahlsteuerung erfolgen. Dies erfordert je nach einzustellender Drehzahl jedoch teilweise ein ständiges Umschalten zwischen den Wicklungsteilen, die mit der Hauptwicklung in Reihe geschaltet werden. Dieses Verfahren ist insbesondere im Hinblick auf die Geräuschentwicklung und die Leistungsfaktorbeeinflussung wesentlich günstiger als die vorgeschriebene Phasenanschnittssteuerung oder die Pulskaskadensteuerung, es stößt jedoch insbesondere bei Motoren größer Leistung an seine Grenzen, da bei jedem Umschalten Stromspitzen in der Wicklung entstehen, welche das Netz und den Motor belasten.

Vor diesem Hintergrund liegt der Erfindung die Aufgabe zugrunde, ein gattungsgemäßes Verfahren zum Ansteuern eines Asynchronmotors zu schaffen, das die vorgenannten Nachteile weitgehend vermeidet und insbesondere auch bei Motoren höherer Leistung einsetzbar ist.

Diese Aufgabe wird gemäß der Erfindung durch die in Anspruch 1 angegebenen Merkmale gelöst. Vorteilhafte Ausgestaltungen des Verfahrens sind in den Unteransprüchen sowie der nachfolgenden Beschreibung und in der Zeichnung angegeben. Ein nach dem erfindungsgemäßen Verfahren arbeitender Asynchronmotor ist in Anspruch 12 angegeben, vorteilhafte Weiterbildungen in den nachfolgenden Unteransprüchen sowie der Beschreibung und Zeichnung.

Das erfindungsgemäße Verfahren zum Ansteuern, insbesondere zur Drehzahlsteuerung eines Asynchronmotors setzt einen Asynchronmotor mit mindestens zwei Wicklungen voraus, bei dem zum Zwecke einer Drehzahländerung eine erste Wicklung und mindestens eine zweite Wicklung mittels mindestens zweier elektronischer Schalter verschaltet werden, wobei beim Umschalten für eine oder mehrere Zeitspannen beide Schalter geöffnet bzw. geöffnet gehalten werden. Das erfindungsgemäße Verfahren bewirkt somit, dass beim Umschalten nicht wie beim Stand der Technik quasi adhoc im Nullpunkt der Versorgungsspannung die Umschaltung erfolgt, indem zum Beispiel die erste Wicklung mit der zweiten Wicklung zur Drehzahlabsenkung in Reihe geschaltet wird oder zur Drehzahlerhöhung in umgekehrter Weise verschaltet wird, sondern dass beim Umschalten für eine oder mehrere Zeitspannen beide Schalter, also auch insbesondere der Schalter öffnend angesteuert wird, welcher die erste Wicklung mit der Versorgungsspannung verbindet. Hierdurch können die sich sonst im Motor einstellenden hohen Stromspitzen vermieden werden, es wird eine gewisse Anpassung an das Spannungsniveau erreicht, welches nach dem Umschalten an der ersten Wicklung anliegt.

Unter Zeitspanne im Sinne der Erfindung ist dabei typischerweise eine Zeitspanne zwischen 5° und 180° einer Wellenlänge (360°) der Versorgungsspannung zu verstehen. Wenn, was vorteilhaft ist, die beiden Schalter über mehrere Zeitspannen geöffnet werden, dann erfolgt dies vorteilhaft in 2 bis 20, vorzugsweise in bis zu 10 Schritten. Dann variiert die Zeitspanne typischerweise zwischen 9° und 108° bezogen auf eine Wellenlänge (360°) der Versorgungsspannung
Das erfindungsgemäße Verfahren kann sowohl bei ein- als auch mehrphasig versorgten Asynchronmotoren eingesetzt werden und eignet sich sowohl für Motoren kleiner als insbesondere auch großer Leistung. Das erfindungsgemäße Verfahren ermöglicht insbesondere die leistungfaktorkonform Drehzahlsteuerung von Asynchronmotoren mit Leistungen über 500 Watt unter Verwendung einfacher elektronischer Schalter, insbesondere Triacs ohne die kostenaufwändige Vorschaltung eines Frequenzumrichters.

Von den beiden Schaltern, von denen gemäß der Erfindung beim Umschalten beide für eine oder mehrere Zeitspannen geöffnet bzw. geöffnet gehalten werden wird typischerweise der Schalter, welcher vor dem Umschalten die erste Wicklung mit einer weiteren Wicklung verschaltet, vollständig, d. h. dauerhaft geöffnet, wohingegen der weitere Schalter, welcher typischerweise die erste Wicklung mit der Versorgungsspannung verbindet für einen oder mehrere Zeitspannen geöffnet, bevor dieser nach dem Umschaltvorgang ständig geschlossen ist. '

Gemäß einer vorteilhaften Weiterbildung der Erfindung bildet das Öffnen des einen Schalters für eine oder mehrere Zeitspannen beim Umschalten Teil einer Phasenanschnittsteuerung, deren Verzögerungswinkel schrittweise verändert wird. Es wird also beim Umschalten das Prinzip der Phasenanschnittsteuerung angewendet um das an der ersten Wicklung anliegende Spannungsniveau schrittweise, d. h. unter weitgehender Vermeidung der beim Stand der Technik bekannten Stromspitzen, an das Spannungsniveau anzupassen, welches an der ersten Wicklung nach der erfolgten Umschaltung anliegt. Es sei darauf hingewiesen, dass zum Ansteuern einer bestimmten Drehzahl des Motors ein mehr oder weniger ständiges Umschalten erforderlich sein kann, wie dies auch aus dem Stand der Technik beim Hin- und Herschalten (toggling) der Wicklungen an sich bekannt ist. Die erfindungsgemäße Anpassung erfolgt dann bei jedem Umschaltvorgang unabhängig davon, ob dieser die erste Wicklung auf ein höheres Spannungsniveau oder ein niedrigeres Spannungsniveau schaltet.

Die Phasenanschnittsteuerung gemäß der Erfindung kann in einfacher Weise mit den vorhandenen elektronischen Schaltern, insbesondere Triacs erfolgen, wobei hierzu zweckmäßigerweise das Triac entsprechend angesteuert wird, welches mit der ersten Wicklung in Reihe liegt, bzw. die erste Wicklung mit dem höheren Spannungsniveau versorgt.

Besonders vorteilhaft ist das erfindungsgemäße Verfahren bei einphasig netzgespeisten Asynchronmotoren anwendbar, da diese damit unter Verwendung einfacher Triacs drehzahlgesteuert werden können ohne die insbesondere bei Motoren größerer Leistung aufgrund der Umschaltvorgänge auftretenden starken Stromspitzen innerhalb der Motorwicklung zu haben. Bei solchen Motoren bildet die erste Wicklung gemäß der Erfindung vorteilhaft die Hauptwicklung wohingegen die zweite und gegebenenfalls weitere Wicklungen Teile der Hilfswicklung oder die Hilfswicklung bilden. Es werden dann in an sich bekannter Weise durch die Schalter die zweite oder auch weitere Wicklungen mit der ersten Wicklung in Reihe geschaltet um eine Drehzahlabsenkung zu erreichen oder umgekehrt.

Gemäß der Erfindung können weitere Wicklungen vorgesehen sein, die zum Zwecke der Drehzahlvarianz mit der ersten Wicklung in Reihe schaltbar sind, wobei jeder dieser Wicklungen ein elektronsicher Schalter, insbesondere ein Triac zugeordnet ist, mit welchem diese Wicklung mit der ersten Wicklung verschaltbar, insbesondere in Reihe schaltbar ist.

Gemäß einer Weiterbildung der Erfindung wird die Phasenanschnittsteuerung beim Umschalten, d. h. beim in Reihe Schalten einer Wicklung mit der ersten Wicklung bzw. beim umgekehrten Schaltvorgang stets mit dem Schalter durchgeführt, welcher die erste Wicklung mit der höheren Spannung beaufschlagt.

Es versteht sich, das beim Vorsehen mehrerer Hilfswicklungsteile, zum Beispiel drei Hilfswicklungsteilen mit diesen zugeordneten drei elektronischen Schaltern und einem weiteren der ersten Wicklung zugeordneten elektronischen Schalter zur Phasenanschnittsteuerung auch eine den Hilfswicklungsteilen zugeordneter Schalter dienen kann, wenn zum Beispiel zwischen zwei Hilfswicklungsteilen umgeschaltet wird.

Um den Umschaltvorgang möglichst gleichmäßig, insbesondere unter Vermeidung größerer Stromspitzen innerhalb der Wicklung zu gestalten, ist gemäß einer Weiterbildung der Erfindung vorgesehen, dass beim Umschalten auf eine höhere an der ersten Wicklung anliegende Spannung die Phasenanschnittsteuerung mit bis auf 0 abfallendem Verzögerungswinkel angesteuert wird. Es werden also die Zeitspannen, in denen der die erste Wicklung mit Spannung versorgende Schalter geöffnet bleibt schrittweise bis auf 0 verkürzt, bis also die höhere Spannung vollständig an der ersten Wicklung anliegt.

Im umgekehrten Fall, wenn beim Umschalten auf eine niedrigere an der ersten Wicklung anliegende Spannung angesteuert wird, erfolgt die Phasenanschnittsteuerung mit einem auf eine vorbestimmten Wert ansteigenden Verzögerungswinkel. Dieser vorbestimmte Wert des Verzögerungswinkels ist so gewählt, dass dabei eine Effektivspannung erzeugt wird, die im Wesentlichen der Spannung entspricht, welche nach dem Umschalten ständig an der ersten Wicklung anliegt.

Wenn beim Umschalten auf eine niedrigere an der ersten Wicklung anliegende Spannung geschaltet wird, kann gemäß einer Weiterbildung der Erfindung anstelle der Phasenanschnittsteuerung die Zeitspanne, nach welcher einer der beiden geöffneten Schalter wieder geschlossen wird, vorteilhaft in Abhängigkeit der in der ersten Wicklung induzierten Spannung gewählt werden. Der Schaltvorgang wird also vorteilhaft nicht zeitabhängig, sondern in Abhängigkeit der in der ersten Wicklung induzierten Spannung ausgelöst. Durch dieses erfindungsgemäße Verfahren können unzulässig hohe Stromspitzen in der Motorwicklung beim Ansteuern auf eine niedrigere Drehzahl zuverlässig vermieden werden.

Vorteilhaft wird beim Umschalten auf eine niedrigere an der ersten Wicklung anliegende Spannung die erste Wicklung solange von der Spannungsversorgung getrennt, bis die in der ersten Wicklung induzierte Spannung auf die Größe dieser nach dem Schaltvorgang anliegenden niedrigeren Spannung abgefallen ist. Dieses Verfahren hat den Vorteil, dass einerseits unzulässig hohe Stromspitzen in der Wicklung vermieden werden, andererseits die erste Wicklung nur solange wie wirklich notwendig von der Spannungsversorgung getrennt wird.

Das erfindungsgemäße Verfahren wird vorteilhaft nicht nur für das Umschalten auf die Drehzahlen des Motors verwendet, die sich bei Verschaltung der einzelnen Wicklungsteile miteinander ergeben sondern gezielt zur Ansteuerung auch dazwischen liegender Drehzahlen verwendet. Wenn also beispielsweise eine Drehzahl angesteuert werden soll, die zwischen den sich bei Verschaltung zweier Teilwicklungen ergebenden Drehzahlen liegt, so ist ein quasi ständiges Umschalten erforderlich. Gerade bei diesem andauernden Umschalten ist das erfindungsgemäße Verfahren von besonderem Vorteil, da der Leistungsfaktor des Motors deutlich verbessert wird und insbesondere auch die aufgrund der Schaltvorgänge in der Wicklung entstehenden Wärme deutlich reduziert wird.

Das erfindungsgemäße Verfahren ermöglicht insbesondere die einfache und kostengünstige Drehzahlsteuerung für einphasig netzgespeiste Asynchronmotoren mit Leistungen über 500 Watt ohne Einsatz eines kostenintensiven Frequenzumrichters. Es können mit dem erfindungsgemäßen Verfahren jedoch auch drehstromgespeiste Asynchronmotoren vorteilhaft drehzahlgesteuert werden. Grundsätzlich beschränkt das erfindungsgemäße Verfahren den Einsatz des Asynchronmotors nicht, besonders vorteilhaft wird das Verfahren jedoch für Nasslaufmotoren von Kreiselpumpen eingesetzt, da aufgrund der weicheren Umschaltvorgänge auch eine deutliche Geräuschreduzierung erreicht werden kann.

Voraussetzung für die Durchführung des erfindungsgemäßen Verfahrens ist ein Asynchronmotor, bei dem mindestens zwei Wicklungen mittels zweier elektronischer Schalter, insbesondere Triacs miteinander zum Zwecke der Drehzahländerung verschaltbar sind. Zur Ansteuerung der Triacs entsprechend der gewünschten Drehzahl weist der Asynchronmotor eine elektronische Steuerung auf, welche zur Ausführung des erfindungsgemäßen Verfahrens ausgebildet ist. Typischerweise handelt es sich bei der Steuerung um eine digitale Steuerung, wobei das erfindungsgemäße Verfahren vorteilhaft softwaremäßig in die Steuerung implementiert ist. Besonders vorteilhaft handelt es sich bei dem Asynchronmotor um einen einphasiggespeisten Motor mit Kreiselpumpenaggregat, dessen Hauptwicklung durch die erste Wicklung und dessen Hilfswicklung durch die zweite oder weitere Wicklung gebildet ist, wie dies bei Asynchronmotoren dieser Art an sich bekannt ist. Durch die Implementierung des erfindungsgemäßen Verfahrens in die Steuerung des Asynchronmotors können Asynchronmotoren mit elektrischer Aufnahmeleistung von mehr als 500 Watt, vorzugsweise sogar mehr als 1 kW unter Verwendung einfacher elektronischer Schalter, insbesondere Triacs drehzahlgesteuert werden ohne unzulässige Beeinflussung des Leistungsfaktors und mit vergleichsweise geringer Geräuschemmission, die somit prädestiniert zum Einsatz in Verbindung mit Nasslaufmotoren sind, wie sie typischerweise zum Antrieb von Umwälzpumpen eingesetzt werden.

Die Erfindung ist nachfolgend anhand von in der Zeichnung dargestellten Ausführungsbeispielen näher erläutert. Es zeigen
- Fig. 1: ein vereinfachtes Schaltbild eines einphasig netzgespeister Asynchronmotors mit Haupt- und Hilfswicklung,
- Fig. 2: ein vereinfachtes Schaltbild eines drehstromgespeisten Asynchronmotors
- Fig. 3: die Effektivspannung an der Hauptwicklung vor, während und nach dem Umschalten und darunter die entsprechenden Verzögerungswinkel der Phasenanschnittsteuerung,
- Fig. 4: den Spannungsverlauf der Versorgungsspannung und darunter den Spannungsverlauf an der Hauptwicklung vor, während und nach dem Umschalten,
- Fig. 5: den Spannungsverlauf der Versorgungsspannung und den Spannungsverlauf an der Hauptwicklung beim Umschalten auf ein niedrigeres Spannungsniveau,Fig. 6 in Darstellung gemäß Fig. 5 das Umschalten auf ein höheres Spannungsniveau,
- Fig. 7: die Effektivspannung an der Hauptwicklung beim Umschalten bei unterschiedlichen Schaltverfahren und darunter der entsprechende Verzögerungswinkel und
- Fig. 8: die an der Hauptwicklung anliegende Spannung sowie die in der Hauptwicklung induzierte Spannung und darunter der in der Hauptwicklung fließende Strom beim Umschalten.

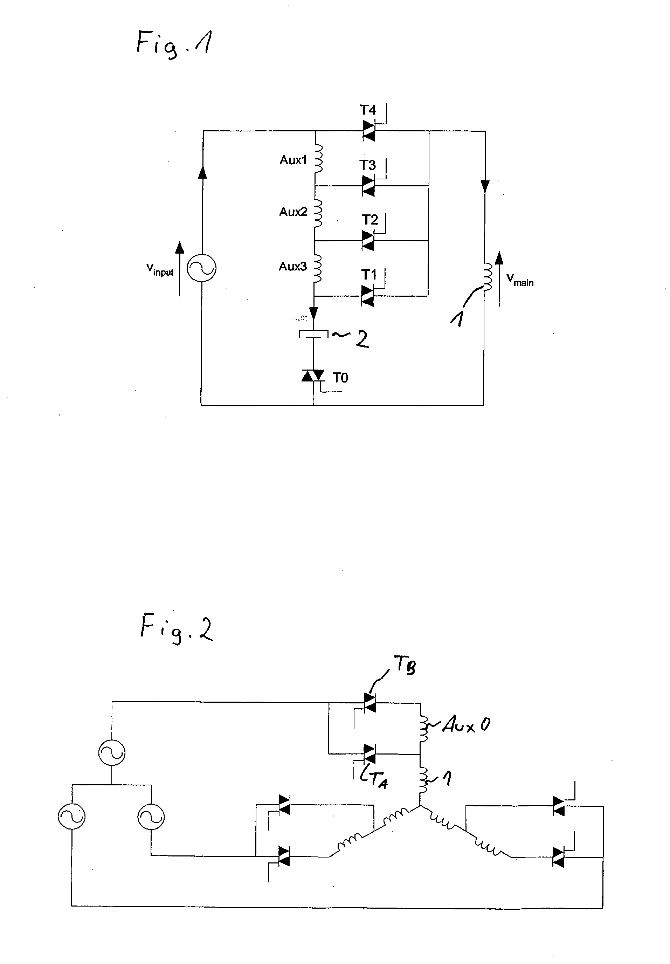

Der anhand von Fig. 1 dargestellte Asynchronmotor weist eine erste Wicklung 1 auf, welche die Hauptwicklung bildet sowie eine Hilfswicklung, die aus drei Teilwicklungen Aux1, Aux2 und Aux3 besteht, die in Reihe mit einem Kondensator 2, und einem elektronischen Schalter in Form eines Triacs T0 geschaltet sind und, wie das Schaltbild gemäß Fig. 1 zeigt, an der Netzversorgungsspannung V_{Input} parallel zur Hauptwicklung 1 liegen. Den Hilfswicklungen Aux1, Aux2 und Aux3 sind jeweils elektronische Schalter in Form von Triacs T1, T2 und T3 zugeordnet mit welchen die Hilfswicklung ganz oder teilweise mit der Hauptwicklung 1 in Reihe schaltbar ist.

Darüber hinaus ist ein Schalter T4 vorgesehen, welcher in Reihe mit der Hauptwicklung liegt und die Hauptwicklung 1 von der Spannungsversorgung trennt oder mit dieser verbindet. Neben dem Schalter T0, der beim Betrieb des Motors stets geschlossen ist und zum Abschalten des Motors erforderlich ist, sind im Betrieb von den Schaltern T1 bis T4 einer geschlossen und die anderen drei geöffnet. Durch Umschalten kann die Drehzahl des Motors gesteuert werden.

Der Motor läuft mit maximaler Drehzahl bei geschlossenem Schalter T4, wenn an der Hauptwicklung 1 die Versorgungsspannung V_{Input} anliegt. Mit abfallender Drehzahl wird der Motor durch Schließen der Schalter T3 bzw. T2 und schließlich T1 angesteuert. Im letztem Fall ist die gesamte Hilfswicklung der Hauptwicklung 1 vorgeschaltet, es liegt somit die geringst mögliche Spannung an der Hauptwicklung an. Durch Umschalten zwischen den Schaltern T1, T2, T3, T4 kann der Motor in quasi jeder beliebiger Drehzahl zwischen den sich in den Endstellungen jeweils bei geschlossenen Schalter T1 bis T4 ergebenden Drehzahlen betrieben werden, was zum Stand der Technik zählt.

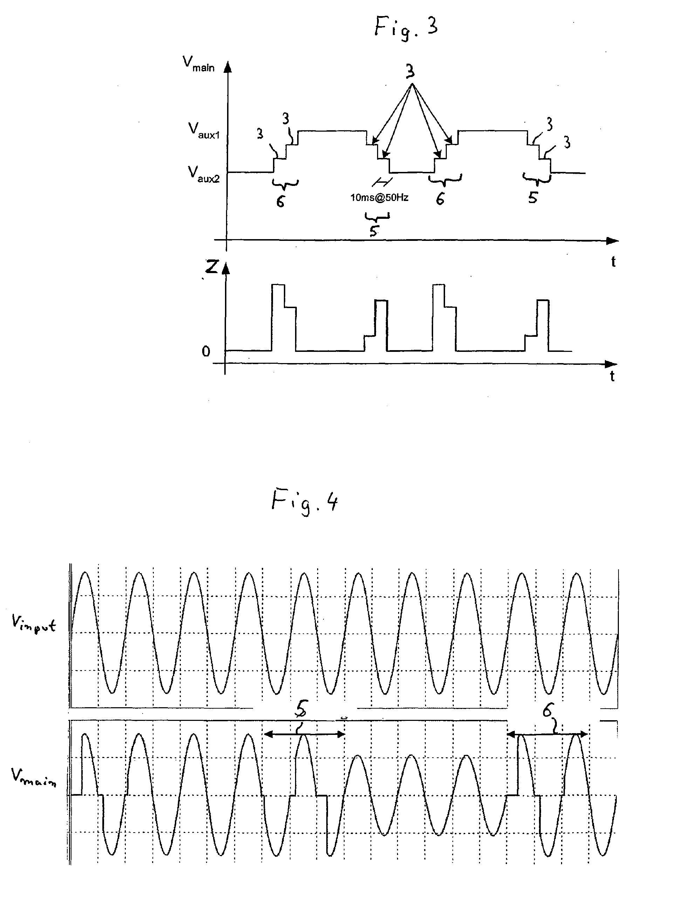

Beim Umschalten der Drehzahl, d. h. beispielsweise beim Öffnen des Schalters T3 und gleichzeitigen Schließen des Schalter T4 im Nullpunkt der Versorgungsspannung entstehen in der Hauptwicklung 1 insbesondere bei Motoren großer Leistung vergleichsweise hohe Spitzenströme. Um dies zu vermeiden wird bei dem erfindungsgemäßen Verfahren nicht wie beim Stand der Technik quasi gleichzeitig im Nulldurchgang der Versorgungsspannung V_{Input} geschaltet sondern, wie anhand der Figuren 3 bis 6 im Einzelnen dargestellt ist, quasi stufenweise.

Bei dem in Fig. 3 auf der Zeitachse links dargestellten ersten Schaltvorgang wird die an der Hauptwicklung 1 anliegende Spannung V_{Aux2}, welche sich bei geschlossenem Schalter T2 ergibt, schrittweise auf die nach dem Schaltvorgang an der Hauptwicklung 1 anliegende höhere Spannung V_{Aux1} angehoben, die sich ergibt, wenn der Schalter T3 geschlossen und die Schalter T1,T2 und T4 geöffnet sind.

Zum Umschalten wird beim Nulldurchgang der Versorgungsspannung V_{Input} der Schalter T2 geöffnet, die Schalter T1 und T4 sind unverändert offen, doch auch der Schalter T3 bleibt zunächst durch eine Phasenanschnittsteuerung dieses Schalters geöffnet. Die Phasenanschnittsteuerung erfolgt so, dass schrittweise der Effektivwert der Spannung (RMS-Wert) an die nach dem Umschalten an der Hauptwicklung 1 anliegende Spannung, wie sie sich bei geschlossenem Schalter T3 ergibt, angepasst wird. Der Schalter T3 wird also beim Hochschalten durch die Phasenanschnittsteuerung in drei Schritten 3 mit bis auf 0 abfallendem Verzögerungswinkel angesteuert, wie dies anhand von Fig. 3 ersichtlich ist. Auf diese Weise wird die Hauptwicklung nicht wie beim Stand der Technik ad hoc mit der höheren Spannung V_{Aux1} beaufschlagt, sondern quasi stufenweise. Die Stufen 3 sind zeitlich durch die Frequenz der Versorgungsspannung bestimmt, die üblicherweise 50 Hz beträgt, so dass jede Stufe 3 eine Zeitspanne von 10 ms dauert. In den anhand von Fig. 3 dargestellten Ausführungsbeispielen erfolgt das Hochschalten in zwei Zwischenstufen, d. h. nach 20 ms ist der Umschaltvorgang beendet und die Hauptwicklung 1 mit der höheren Spannung V_{Aux1} versorgt. In Fig. 3 sind nur beispielhaft zwei Stufen der Phasenanschnittsteuerung dargestellt, es können jedoch mehrere Stufen 3 bzw. Schritte 3 beim Umschalten gewählt werden, umso weicher wird der Umschaltvorgang, d. h. umso weniger Stromspitzen treten innerhalb der Motorwicklung 1 auf.

Bei der anhand von Fig. 3 dargestellten Schaltsequenz erfolgt nach einer gewissen Zeit eine Umschaltung von V_{Aux1} auf V_{Aux2}, indem in umgekehrter Weise der Schalter T3 geöffnet und der Schalter T2 geschlossen wird. Auch dies erfolgt in Stufen 3, hier beispielhaft zwei Stufen 3. Beim Umschalten auf eine niedrigere Spannung, hier V_{Aux2} bleibt der Schalter T2 zunächst geöffnet, es wird jedoch zusätzlich der Schalter T3 geöffnet, und zwar zunächst nur kurzzeitig, also während einer kurzen Zeitspanne, die so gewählt ist, dass sich eine unter der Spannung V_{Aux1} liegende, aber noch deutlich über V_{Aux2} liegende Effektivspannung an der Wicklung 1 ergibt. Dies geschieht in gleicher Weise mit Phasenanschnittssteuerung wie vorbeschrieben. Allerdings wird beim Herunterschalten auf eine niedrigere Spannung anders als beim Heraufschalten mit einer Phasenanschnittsteuerung gearbeitet, bei welcher der Verzögerungswinkel von Null auf einen vorbestimmten Wert ansteigend gewählt wird. Dabei ist dieser vorbestimmte Wert so gewählt, dass sich eine Effektivspannung ergibt, welcher etwa der Spannung entspricht, auf welche heruntergeschaltet werden soll, hier also V_{Aux2}. Wie anhand von Fig. 3, in der insgesamt vier Schaltvorgänge in vergleichsweise kurzen zeitlichen Abstand dargestellt sind, verdeutlicht werden soll, wird durch dieses Hin-und Herschalten (toggling) zwischen den Schaltern T2 und T3 ein Spannungsniveau an der Hauptwicklung 1 erzielt, das zeitlich gemittelt zwischen V_{Aux1} und V_{Aux2} liegt und somit eine dazwischen liegende Drehzahl angesteuert.

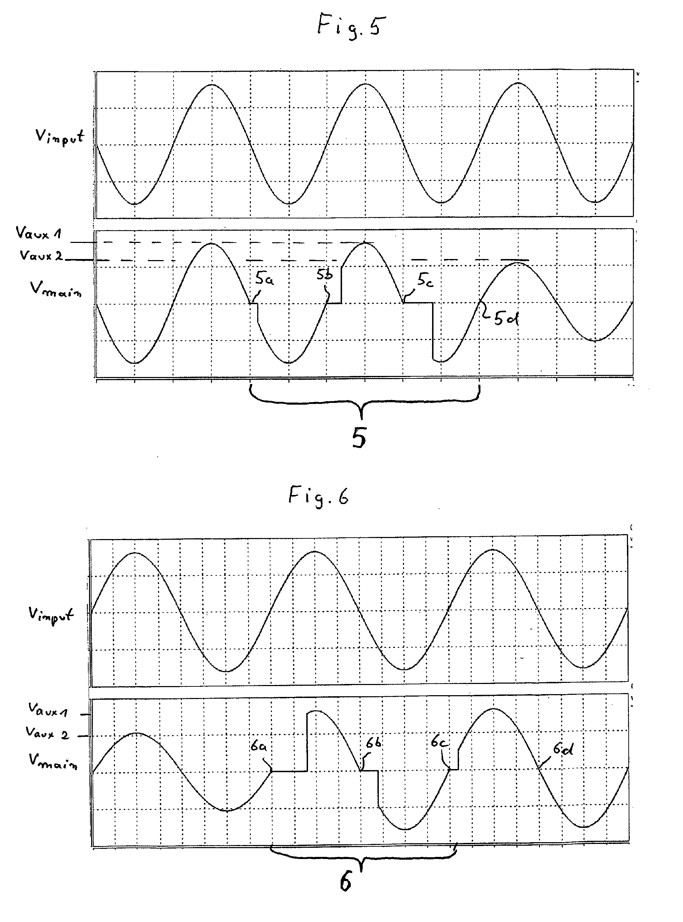

Wie sich bei diesen Schaltvorgängen, wie sie anhand von Fig. 3 dargestellt sind, die an der Hauptwicklung 1 anliegende Spannung Vₘₐᵢₙ im Vergleich zu der Versorgungsspannung V_{Input} verhält ist anhand von Fig. 4 dargestellt, wobei der Umschaltvorgang 5 das Herunterschalten von V_{Aux1} auf V_{Aux2} zeigt wohingegen der Umschaltvorgang 6 das nachfolgende Hochschalten darstellt. Wie der Spannungsverlauf beim Herrunterschalten im Einzelnen aussieht ist in Fig. 5 dargestellt, Fig. 6 zeigt den entsprechenden Spannungsverlauf beim Hochschalten, jeweils immer mit zum Vergleich oben dargestellter Versorgungsspannung V_{Input} und der sich an der Hauptwicklung 1 ergebenden Spannung Vₘₐᵢₙ darunter.

Wie beispielhaft Fig. 5 verdeutlicht, erfolgt dort das Herunterschalten in drei Stufen 3 mittels Phasenanschnittsteuerung. Beim ersten Schaltvorgang 5a wird der Schalter T3 (bei geöffnetem Schalter T2) für eine noch sehr kurze Zeitspanne, nämlich etwa für 18° bezogen auf die Wellenlänge (360°) der Versorgungsspannung V_{Input} verzögert eingeschaltet, so dass sich ein Effektivwert der Spannung ergibt, der zunächst nur geringfügig unter V_{Aux1} liegt. Bei dem darauf folgenden Schaltzeitpunkt 5b wird diese zeitliche Verzögerung durch die Phasenanschnittsteuerung also der Verzögerungswinkel vergrößert, hier etwa auf etwa 36°. In der dritten Stufe wird dann zum Zeitschaltpunkt 5c nochmals eine weitere Einschaltverzögerung auf etwa 72° durchgeführt, so dass hier in drei Stufen das Spannungsniveau von V_{Aux1} auf V_{Aux2} heruntergeführt wird. Es wird dann schließlich im Schaltzeitpunkt 5d gleichzeitig der Schalter T3 geöffnet und der Schalter T2 geschlossen, so dass ab dann V_{Aux2} an der Hauptwicklung 1 anliegt.

Beim Hochschalten erfolgt dies im Wesentlichen in umgekehrter Richtung. In Fig. 6 sind die entsprechenden Schaltzeitpunkte mit 6a bis 6d eingezeichnet. Beim Hochschalten auf ein höheres Spannungsniveau wird allerdings zunächst der Schalter T2 geöffnet, der bisher die Spannungsversorgung für die Hauptwicklung 1 besorgte. Der Schalter T3 mit dem darüber liegenden nächst höheren Spannungsniveau bleibt geöffnet im Zeitpunkt 6a, wird allerdings schon mit Phasenanschnittssteuerung angesteuert, und zwar zunächst mit einem vergleichsweise großen Verzögerungswinkel von hier 76° um eine Effektivspannung zu erzeugen, die nur geringfügig über der bisherigen Spannung V_{Aux2} liegt. Hier erfolgt dann in umgekehrter Weise eine Verringerung des Verzögerungswinkels Z bis auf 0 abfallend, bis also der Schalter T3 im Zeitpunkt 6d ständig geschlossen ist und die übrigen Schalter T1, T2 und T4 geöffnet sind.

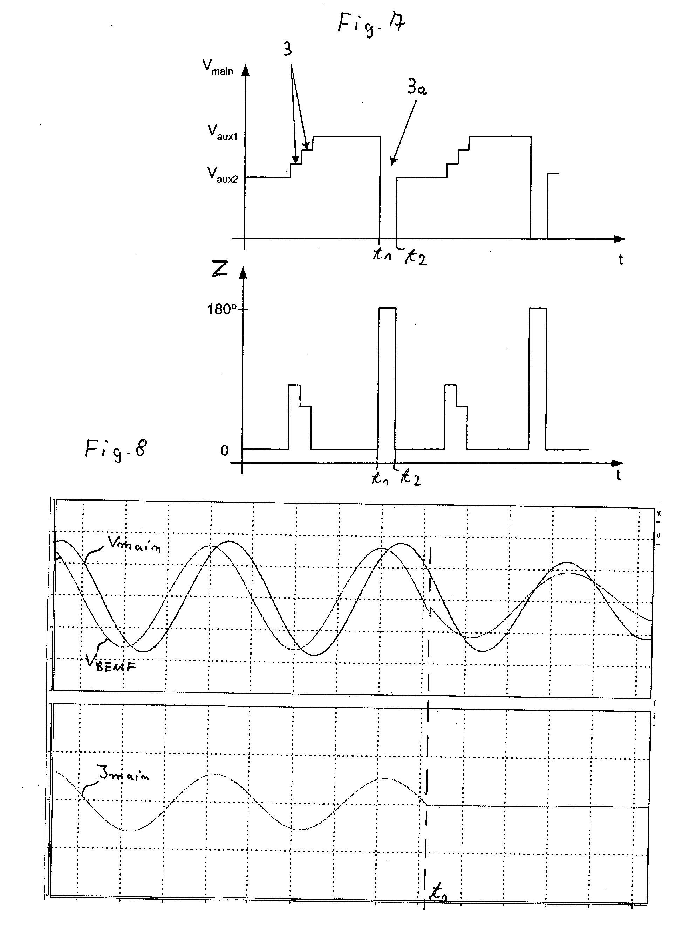

Wie die anhand der Figuren 7 und 8 dargestellten Schaltvorgänge verdeutlichen, kann das Herunterschalten auf ein niedrigeres Spannungsniveau auch in anderer Weise als durch Phasenanschnittsteuerung erfolgen, nämlich dadurch dass die in der Hauptwicklung 1 induzierte Spannung ermittelt und mit der Spannung V_{Aux2} verglichen wird, welche an der Hauptwicklung 1 nach dem Umschaltvorgang anliegt. Diese in Fig. 7 mit 3a gekennzeichnete Verzögerungszeit ist nicht vorbestimmt sondern durch den Verlauf der induzierten Spannung in der ersten Wicklung 1 definiert. Fig. 8 zeigt im oberen Diagramm die an der Hauptwicklung 1 anliegende Spannung Vₘₐᵢₙ sowie die in der Hauptwicklung induzierte Spannung V_{BEMF} die dieser nacheilt. Deutlich sichtbar ist der Schaltzeitpunkt t₁, wenn der Schalter T3 bei geöffneten Schaltern T1, T2 und T4 ebenfalls geöffnet wird, wonach in der Wicklung kein Strom mehr fließt, wie in dem unteren Diagramm der Fig. 8 ersichtlich ist. Es wird nun die in der Hauptwicklungsich einstellende induzierte Spannung V_{BEMF} gemessen und solange gewartet, bis diese Spannung auf den Wert Vₐᵤₓ₂ abgefallen ist. Sobald dies der Fall ist, dieser Zeitpunkt ist mit t₂ gekennzeichnet, wird der Schalter T2 schließend angesteuert und fortan die Hauptwicklung 1 mit der Spannung Vₐᵤₓ₂ versorgt, bis nachfolgend wieder hochgeschaltet wird. Wie Fig. 7 zeigt, ist die Zeitspanne 3a zwischen t₁ und t₂ in diesem Ausführungsbeispiel nahezu 180°, also nahezu einer halbe Wellenlänge der Versorgungsspannung Vₘₐᵢₙ.

Im vorstehenden Ausführungsbeispiel gemäß Schaltbild nach Fig. 1 ist zwar das Hoch- und Herrunterschalten durch Betätigung der Schalter T2 und T3 beschrieben, es versteht sich, dass jedoch in analoger Weise eine Umschaltung zwischen T1 und T2 sowie zwischen T3 und T4 erfolgen kann. Die Phasenanschnittsteuerung erfolgt immer mit dem Schalter, welcher der ersten Wicklung 1 die höhere Spannung zuführt.

Darüber hinaus kann eine Verbesserung des Motors noch dadurch erzielt werden, dass in dem Hilfswicklungsstrang gemäß Fig. 1 parallel zum Kondensator 2 und Schalter T0 ein weiterer Kondensator mit einem in Reihe dazu liegenden Schalter geschaltet wird. Auf diese Weise kann entsprechend der an der Hauptwicklung 1 anliegenden Spannung die Kapazität angepasst werden, so dass unterschiedliche Kapazitäten für unterschiedliche Drehzahlen zur Verfügung stehen. Mit zwei parallelen Kondensatoren können drei Kapazitätsvarianten realisiert werden, die entsprechend den jeweils anliegenden Spannungen durch die Steuerung geschaltet werden können.

Auch wenn das erfindungsgemäße Verfahren anhand eines einphasig netzgespeisten Asynchronmotors gemäß Fig. 1 beschrieben worden ist, so kann dieses auch bei dreiphasig netzgespeisten Motoren, also Drehstromasynchronmotoren angewendet werden, wie dies anhand von Fig. 2 beispielhaft dargestellt ist. Die erste Windung 1 kann durch Zuschalten einer weiteren Wicklung Aux0 erweitert werden. Hierzu sind auch wiederum zwei Schalter nämlich die Schalter TA und TB vorgesehen. Zur besseren Übersicht ist nur ein Strang dieses in Sternschaltung geschalteten Dreiphasenasynchronmotors dargestellt. Die Umschaltung durch Zuschaltung der Wicklungs Aux0 bzw. Abschaltung der Wicklung Aux0 erfolgt in analoger Weise wie weiter oben beschrieben, das Verfahren kann in allen drei Strängen entsprechend ausgeführt werden. Das Verfahren beschränkt sich nicht auf Dreiphasenmotoren in Sternschaltung, sondern kann entsprechend auch in Dreieckschaltung angewendet werden, dann liegen die Wicklungen 1 und Aux0 jeweils in einer Seite des Dreiecks wobei die Schalter TA und TB die eine Phase der Netzversorgung mit einer Spitze des Dreiecks und der andere Schalter mit einem Punkt zwischen den Wicklungen 1 und Aux0 verbinden (Dreieckschaltung nicht dargestellt). In vereinfachter Form kann das erfindungsgemäß Verfahren auch mit einem Drehstrommotor in Sternschaltung erfolgen, beidem zwei der drei Wicklungen jeweils über einen Schalter mit der entsprechenden Phase der Netzversorgung geschaltet sind, so dass in analoger Weise die Wicklungen zu- oder abgeschaltet werden können.

### Bezugszeichenliste

- 1 -: erste Wicklung (in Fig. 1 Hauptwicklung)
- 2 -: Kondensator der Hilfswicklung
- 3 -: Stufe, Schnitt
- 5 -: Umschaltvorgang, Schalten auf niedriger Spannung
- 6 -: Umschaltvorgang, Schalten auf höhere Spannung
- TA, TB, -: Triacs
- T0 bis T4 -: Triacs
- Aux1, Aux2, -: Teile der Hilfswicklung
- Aux3 -: Teile der Hilfswicklung
- Aux0 -: weitere Wicklung in Fig. 2
- Vᵢₙₚᵤₜ -: Eingangsspannung des Motors
- Vₘₐᵢₙ -: an der ersten Wicklung anliegende Spannung
- Vₐᵤₓ₁ -: Spannung die sich an der Wicklung 1 ergibt, wenn die Wicklung auxl zu dieser in Reihe geschaltet ist
- Vₐᵤₓ₂: Spannung die sich an der Wicklung 1 ergibt, wenn die Wicklung Aux 1 und Aux 2 zu dieser in Reihe geschaltet ist
- t₁: Zeitpunkt
- t₂: Zeitpunkt
- Z: Verzögerungswinkel

## Patentansprüche

1. Verfahren zum Ansteuern eines mindestens zwei Wicklungen aufweisenden Asynchronmotors, bei dem zum Zwecke einer Drehzahländerung eine erste Wicklung und mindestens eine zweite Wicklung mittels mindestens zwei elektronischen Schaltern verschaltet werden, **dadurch gekennzeichnet, dass** beim Umschalten für eine oder mehrere Zeitspannen beide Schalter öffnend angesteuert werden.

2. Verfahren nach Anspruch 1, **dadurch gekennzeichnet, dass** das Öffnen des einen Schalters beim Umschalten Teil einer Phasenanschnittsteuerung ist, deren Verzögerungswinkels schrittweise verändert wird.

3. Verfahren nach einem der vorhergehenden Ansprüche, **dadurch gekennzeichnet, dass** die Phasenanschnittssteuerung mittels eines elektronischen Schalters, insbesondere eines Triacs erfolgt, welcher mit der ersten Wicklung in Reihe liegt.

4. Verfahren nach einem der vorhergehenden Ansprüche, **dadurch gekennzeichnet, dass** die erste Wicklung die Hauptwicklung eines einphasig netzgespeisten Asynchronmotors bildet und die zweite und ggf. weitere Wicklung einen Teil der oder die Hilfswicklung bildet.

5. Verfahren nach einem der vorhergehenden Ansprüche, **dadurch gekennzeichnet, dass** weitere Wicklungen vorgesehen sind, die zum Zwecke der Drehzahlvarianz mit der ersten Wicklung in Reihe schaltbar sind, wobei jeder Wicklung ein elektronischer Schalter, insbesondere ein Triac zugeordnet ist.

6. Verfahren nach einem der vorhergehenden Ansprüche, **dadurch gekennzeichnet, dass** die Phasenanschnittssteuerung mit dem Schalter durchgeführt wird, welcher die erste Wicklung mit der höheren Spannung beaufschlagt.

7. Verfahren nach einem der vorhergehenden Ansprüche, **dadurch gekennzeichnet, dass** beim Umschalten auf eine höhere an der ersten Wicklung anliegende Spannung die Phasenanschnittsteuerung mit bis auf Null abfallenden Verzögerungswinkel angesteuert wird.

8. Verfahren nach einem der vorhergehenden Ansprüche, **dadurch gekennzeichnet, dass** beim Umschalten auf eine niedrigere an der ersten Wicklung anliegende Spannung die Phasenanschnittsteuerung mit bis auf einen vorbestimmten Wert ansteigenden Verzögerungswinkel angesteuert wird.

9. Verfahren nach Anspruch 1, **dadurch gekennzeichnet, dass** beim Umschalten auf eine niedrigere an der ersten Wicklung anliegende Spannung der Schaltvorgung in Abhängigkeit der in der ersten Wicklung induzierten Spannung ausgelöst wird.

10. Verfahren nach einem der vorhergehenden Ansprüche, **dadurch gekennzeichnet, dass** beim Umschalten auf eine niedrigere an der ersten Wicklung anliegende Spannung die erste Wicklung solange von der Spannungsversorgung getrennt wird bis die in der ersten Wicklung induzierte Spannung auf die Größe dieser niedrigeren Spannung abgefallen ist.

11. Verfahren nach einem der vorhergehenden Ansprüche, **dadurch gekennzeichnet, dass** es zur Erzeugung von Motordrehzahlen eingesetzt wird, welche zwischen den Drehzahlen liegen, welche sich bei fester Verschaltung der Motorwicklungen ergeben.

12. Asynchronmotor mit mindestens zwei Wicklungen (1, Aux), bei dem eine erste Wicklung (1) zum Zwecke einer Drehzahländerung mittels mindestens zweier elektronischen Schalter (T0 bis T4) mit einer zweiten Wicklung (Aux) verschaltbar ist und mit einer elektronischen Steuerung zur Ausführung des Verfahrens nach einem der vorhergehenden Ansprüche.

13. Asynchronmotor nach Anspruch 12, **dadurch gekennzeichnet, dass** es ein einphasig gespeister Motor eines Kreiselpumpenaggregats ist, dessen Hauptwicklung durch die erste Wicklung (1) und dessen Hilfswicklung durch die zweite oder weitere Wicklungen (Aux) gebildet ist/sind.

14. Asynchronmotor nach Anspruch 11 oder 12, **dadurch gekennzeichnet, dass** er eine elektrische Aufnahmeleistung von mehr als 500 W, vorzugsweise mehr als 1 kW hat.
